# EUROPEAN PATENT APPLICATION

(11) **EP 3 961 584 A2**
(43) Date of publication of application: **02.03.2022**
(21) Application number: 22150574.6
(22) Date of filing: 07.01.2022
(51) Int. Cl.: G06V 30/10

(54) **CHARACTER RECOGNITION METHOD, MODEL TRAINING METHOD, RELATED APPARATUS AND ELECTRONIC DEVICE**

(30) Priority: 10.03.2021 CN 202110261383
(71) Applicant: Beijing Baidu Netcom Science and Technology Co., Ltd., Beijing 100085 (CN)
(72) Inventor: LV, Pengyuan, Beijing 100085 (CN); ZHANG, Chengquan, Beijing 100085 (CN); YAO, Kun, Beijing 100085 (CN); HAN, Junyu, Beijing 100085 (CN)
(74) Representative: Bergadano, Mirko

(57) **Abstract**

A character recognition method, a model training method, a related apparatus and an electronic device are provided, and are related to the artificial intelligence technical field of computer vision and deep learning. The specific solution is: obtaining a target picture; performing feature encoding on the target picture to obtain a visual feature of the target picture; performing feature mapping on the visual feature to obtain a first target feature of the target picture, where the first target feature is a feature that has a matching space with a feature of character semantic information of the target picture; inputting the first target feature into a character recognition model for character recognition to obtain a first character recognition result of the target picture. The technology according to the present application solves the problem of relatively low character recognition accuracy in the character recognition technology, and improves the character recognition accuracy of pictures.

## Description

### TECHNICAL FIELD

The present application relates to the technical field of artificial intelligence, in particular to the technical field of computer vision and deep learning, and specifically to a character recognition method, a model training method, a related apparatus and an electronic device.

### BACKGROUND

Character recognition technology may be widely used in all walks of life in society, such as education, medical care and finance. Technologies such as recognition of common card bills, automatic entry of documents, and photographic search for questions derived from character recognition technologies have greatly improved intelligence and production efficiency of traditional industries, and facilitated people's daily study and life.

At present, solutions for character recognition of pictures usually only use visual features of the pictures, and the characters in the pictures are recognized through the visual features.

### SUMMARY

The present disclosure discloses a character recognition method, a model training method, a related apparatus and an electronic device.

According to a first aspect of the present disclosure, a character recognition method is provided, including: obtaining a target picture; performing feature encoding on the target picture to obtain a visual feature of the target picture; performing feature mapping on the visual feature to obtain a first target feature of the target picture, where the first target feature is a feature that has a matching space with a feature of character semantic information of the target picture; inputting the first target feature into a character recognition model for character recognition to obtain a first character recognition result of the target picture.

According to a second aspect of the present disclosure, a model training method is provided, including: obtaining training sample data, where the training sample data includes a training picture and a semantic label of character information in the training picture; obtaining a second target feature of the training picture and a third target feature of the semantic label respectively, where the second target feature is obtained based on visual feature mapping of the training picture, the third target feature is obtained based on language feature mapping of the semantic label, and a feature space of the second target feature matches with a feature space of the third target feature; inputting the second target feature into a character recognition model for character recognition to obtain a second character recognition result of the training picture; and inputting the third target feature into the character recognition model for character recognition to obtain a third character recognition result of the training picture; updating a parameter of the character recognition model based on the second character recognition result and the third character recognition result.

According to a third aspect of the present disclosure, a character recognition apparatus is provided, including: a first obtaining module, configured to obtain a target picture; a feature encoding module, configured to perform feature encoding on the target picture to obtain a visual feature of the target picture; a feature mapping module, configured to perform feature mapping on the visual feature to obtain a first target feature of the target picture, where the first target feature is a feature that has a matching space with a feature of character semantic information of the target picture; a first character recognition module, configured to input the first target feature into a character recognition model for character recognition to obtain a first character recognition result of the target picture.

According to a fourth aspect of the present disclosure, a model training apparatus is provided, including: a second obtaining module, configured to obtain training sample data, where the training sample data includes a training picture and a semantic label of character information in the training picture; a third obtaining module, configured to obtain a second target feature of the training picture and a third target feature of the semantic label respectively, where the second target feature is obtained based on visual feature mapping of the training picture, and the third target feature is obtained based on language feature mapping of the semantic label, a feature space of the second target feature matches with a feature space of the third target feature; a second character recognition module, configured to input the second target feature into a character recognition model for character recognition to obtain a second character recognition result of the training picture; and input the third target feature into the character recognition model for character recognition to obtain a third character recognition result of the training picture; an updating module, configured to update a parameter of the character recognition model based on the second character recognition result and the third character recognition result.

According to a fifth aspect of the present disclosure, an electronic device is provided, including: at least one processor; and a memory communicatively connected with the at least one processor; where, the memory stores instructions executable by the at least one processor, and the instructions are executed by the at least one processor, so that the at least one processor may execute the method according to any one of the first aspect, or execute the method according to any one of the second aspect.

According to a sixth aspect of the present disclosure, a non-transitory computer readable storage medium storing thereon computer instructions is provided, and the computer instructions causes a computer to execute the method according to any one of the first aspect, or execute the method according to any one of the second aspect. According to a seventh aspect of the present disclosure, a computer program product is provided, and the computer program product includes a computer program. When executing the computer program, a processor implements the method according to any one of the first aspect, or implements the method according to any one of the second aspect.

The technology according to the present application solves the problem of relatively low character recognition accuracy in a character recognition technology, and improves character recognition accuracy of pictures.

It should be understood that the content described in this section is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the solution, and do not constitute a limitation to the present application.
FIG. 1 is a schematic flowchart of a character recognition method according to a first embodiment of the present application;
FIG. 2 is a schematic view of an implementation framework of the character recognition method;
FIG. 3 is a schematic flowchart of a model training method according to the second embodiment of the present application;
FIG. 4 is a schematic view of a training implementation framework of the character recognition model;
FIG. 5 is a schematic view of a character recognition apparatus according to the third embodiment of the present application;
FIG. 6 is a schematic view of a model training apparatus according to the fourth embodiment of the present application;
FIG. 7 shows a schematic block diagram of an example electronic device 700 that may be used to implement the embodiments of the present disclosure.

### DETAILED DESCRIPTION

The following describes exemplary embodiments of the present application with reference to the accompanying drawings, which include various details of the embodiments of the present application to facilitate understanding, and should be regarded as merely exemplary. Therefore, those of ordinary skill in the art should recognize that various changes and modifications may be made to the embodiments described herein without departing from the scope and spirit of the present disclosure. Likewise, for clarity and conciseness, descriptions of well-known functions and structures are omitted in the following description.

### First Embodiment

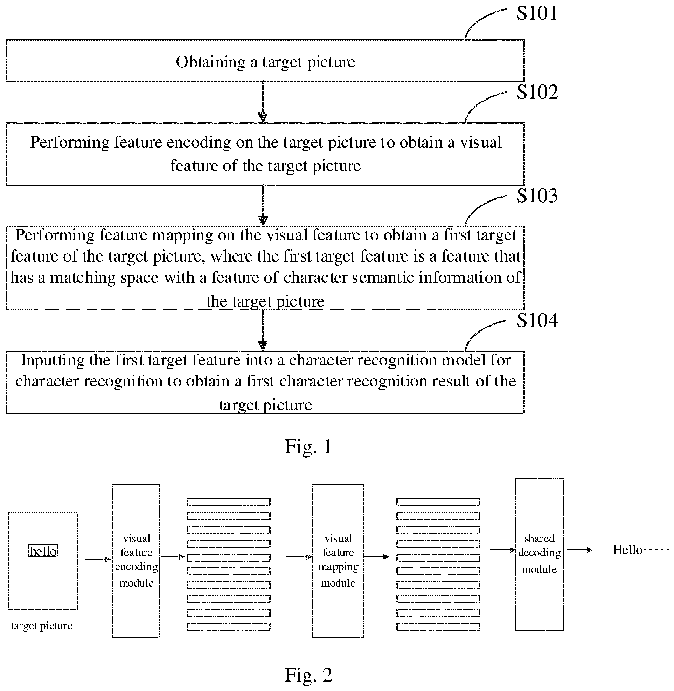

As shown in FIG. 1, the present application provides a character recognition method, including Step S101 to Step S104.

Step S101: obtaining a target picture.

In the present embodiment, the character recognition method relates to the field of artificial intelligence, in particular to the technical field of computer vision and deep learning, and may be widely used in character detection and recognition scenarios in pictures. This method may be executed by a character recognition apparatus of the embodiments of the present application. The character recognition apparatus may be configured in any electronic device to execute the character recognition method of the embodiments of the present application. The electronic device may be a server or a terminal, which is not specifically limited here.

The target picture may be a text picture, where the text picture refers to a picture that includes text content, the text content may include a character, and the character may be a Chinese character, an English character, or a special character. The characters may form a word. A purpose of the embodiments of the present application is to recognize a word in the picture through character recognition, and a recognition scene is not limited to a scene that a picture includes broken text, occluded text, unevenly illuminated text, or blurred text.

The target picture may be obtained in various ways: a pre-stored text picture may be obtained from an electronic device, a text picture sent by other devices may be received, a text picture may be downloaded from the Internet, or a text picture may be taken through a camera function.

Step S102: performing feature encoding on the target picture to obtain a visual feature of the target picture.

In this step, feature encoding refers to feature extraction, that is, performing feature encoding on the target picture refers to that feature extraction is performed on the target picture.

The visual feature of the target picture includes a feature such as texture, color, shape, and spatial relationship. There may be multiple ways for extracting the visual feature of the target picture. For example, the feature of the target picture may be extracted manually. For another example, the feature of the target picture may also be extracted by using a convolutional neural network.

Taking the use of a convolutional neural network to extract the visual feature of the target picture as an example, theoretically convolutional neural networks of any structure such as VGG, ResNet, DenseNet or MobileNet, and some operators that may be used to improve network effect such as Deformconv, Se , Dilationconv, or Inception, may be used to perform feature extraction on the target picture to obtain the visual feature of the target picture.

For example, for a target picture having an input size of h*w, a convolutional neural network may be used to extract the visual feature of the target picture, and its size is 1*w, which may be denoted as I_feat.

Step S103: performing feature mapping on the visual feature to obtain a first target feature of the target picture, where the first target feature is a feature that has a matching space with a feature of character semantic information of the target picture.

In this step, feature mapping refers to learning some knowledge from one domain (which may be called a source domain) and transferring it to another domain (which may be called a target domain) to enhance characterizing performance of a feature. The definition of the domain is based on a feature space, and a characteristic that may describe all possibilities in a mathematical sense may be called the feature space. If there are n feature vectors, then a space formed by them may be called a n-dimensional feature space. Each point in the space may describe a possible thing, and this thing may be described by n attribute characteristics in a problem, and each attribute characteristic may be described by a feature vector.

The feature of the character semantic information of the target picture may be a language feature of the character in the target picture, and the language feature may represent a semantic characteristic of the character in the target picture. For example, the word "SALE" composed of characters has a meaning of "selling", and the meaning of "selling" may constitute semantic characteristic of these characters.

A function of performing feature mapping on the visual feature is to map the visual feature and the language feature to a matching feature space to obtain a first target feature corresponding to a feature space of a target domain, that is, the visual feature is mapped to one target domain to obtain the first target feature of the target picture, and the language feature is mapped to another target domain to obtain another target feature of the target picture, and the feature spaces of the two target domains match.

In an optional implementation, feature spaces matching may refer to the feature spaces being the same, and feature spaces of two domains being the same means that same attribute may be applied to the two domains to describe characteristics of things. Since the first target feature and the other target feature of the target picture both describe the same picture in the same feature space, that is, describe a same event, the first target feature and the other target feature are similar in the feature space. In other words, the first target feature has the visual feature of the target picture and at the same time has the language feature of the character in the target picture.

In theory, all functions may be used as a mapping function to perform feature mapping on the visual feature to obtain the first target feature of the target picture. A deep learning model transformer may be used as one kind of mapping function, that is, the transformer may be used as the mapping function. Using the transformer as the mapping function may perform non-linear transformation on the visual feature, and may also obtain a global feature of the target picture.

By performing feature mapping on the visual feature, the first target feature may be obtained, which is represented by IP_feat.

For example, for a target picture having an input size of h*w, feature mapping on the visual feature I_feat is performed by using the transformer as a mapping function, the first target feature may be obtained. A feature dimension of the first target feature may be w*D, and the first target feature may be denoted as IP_feat, where D is a feature dimension and is a custom hyperparameter.

Step S104: inputting the first target feature into a character recognition model for character recognition to obtain a first character recognition result of the target picture. The character recognition model may be a deep learning model, which may be used to decode a feature, and a decoding process of the character recognition model may be called character recognition.

Specifically, the first target feature may be input into a character recognition model for feature decoding, i.e., character recognition, to obtain a character probability matrix, and the character probability matrix indicates a probability of each character in the target picture belonging to a preset character category.

For example, the character probability matrix is w*C, where C is the number of preset character categories, such as 26, which means that there are 26 character categories preset, and w represents the number of characters recognized based on the first target feature. In the character probability matrix, C elements in each row may respectively represent a probability of belonging to a corresponding character category.

In the prediction, a target character category corresponding to a largest element in each row of the character probability matrix may be obtained, and a character string formed by the recognized target character category is the first character recognition result of the target picture. The character string may constitute a word, such as the character string "hello", which may constitute an English word, so that the word in the picture may be recognized through character recognition.

In an optional implementation, the character string formed by the recognized target character category may include some additional characters. These additional characters are added in advance to align the character semantic information with the dimension of the visual feature. In this application scenario, the additional characters may be removed, and finally the first character recognition result is obtained.

For example, the target picture includes the text content "hello", and the character probability matrix is w rows and C columns. If w is 10, after taking the target character category with a highest probability for each row, a resulting string is hello[EOS] [EOS][EOS][EOS][EOS], where [EOS] is an additional character added in advance, after removing it, the first character recognition result "hello" may be obtained.

In addition, before the character recognition model is used, the character recognition model needs to be pre-trained so that it may perform character recognition according to the first target feature of the feature space of the target domain obtained after the visual feature mapping. The first target feature of the feature space of the target domain obtained after the visual feature mapping may describe the attributes of the visual feature of the target picture, and may also describe the attributes of the language feature of the target picture.

In this embodiment, feature mapping is performed on the visual feature to obtain a first target feature of the target picture, where the first target feature is a feature that has a matching space with a feature of character semantic information of the target picture; and the first target feature is input into a character recognition model for character recognition to obtain a first character recognition result of the target picture In this way, character recognition may be performed on the target picture in combination with the language feature and the visual feature.

In some complex scenes such as incomplete visual defect scenes, the character "E" in the text content "SALE" in the picture is incomplete. If character recognition is performed based on the visual feature, the recognition result is "SALL". Performing character recognition in combination with the language feature and the visual feature may enhance semantics of the text in the picture, so that the recognized result may be "SALE". Therefore, performing character recognition on the target picture in combination with the language feature and the visual feature may improve the character recognition effect, especially in complex scenes such as incomplete, occluded, blurred, and unevenly illuminated visually defect scenes, thereby improving the character recognition accuracy of the picture.

Optionally, the step S103 specifically includes: performing non-linear transformation on the visual feature by using a target mapping function to obtain the first target feature of the target picture.

In this embodiment, the target mapping function may be a mapping function capable of performing non-linear transformation on a feature, such as transformer, which may perform non-linear transformation on the visual feature to obtain the first target feature of the target picture. At the same time, using the transformer as the mapping function may also obtain a global feature of the target picture. In this way, accuracy of feature mapping may be improved, and accuracy of character recognition may be further improved.

In order to explain the solution of the embodiments of the present application in more detail, the implementation process of the entire solution is described in detail below.

Referring to FIG. 2, FIG. 2 is a schematic view of an implementation framework of the character recognition method. As shown in FIG. 2, in order to implement the character recognition method of the embodiments of the present application, three modules are included, namely a visual feature encoding module, a visual feature mapping module and a shared decoding module.

Specifically, a target picture having a size of h*w is input, and the target picture includes text content of "hello". The target picture is input into the implementation framework to perform character recognition on the target picture, so as to obtain a recognition result of the word in the target picture.

In the implementation process, feature encoding on the target picture is performed by the visual feature encoding module to extract the visual feature of the target picture. The extracted visual feature is input into the visual feature mapping module, and the visual feature mapping module performs feature mapping on the visual feature to obtain a first target feature, where the first target feature is a feature that has a matching space with a feature of character semantic information of the target picture. The first target feature is input into the shared decoding module, and the shared decoding module may perform feature decoding on the first target feature through a character recognition model for character recognition on the target picture to obtain a character probability matrix. The character probability matrix may be used to determine the character category in the target picture and obtain the character recognition result.

### Second Embodiment

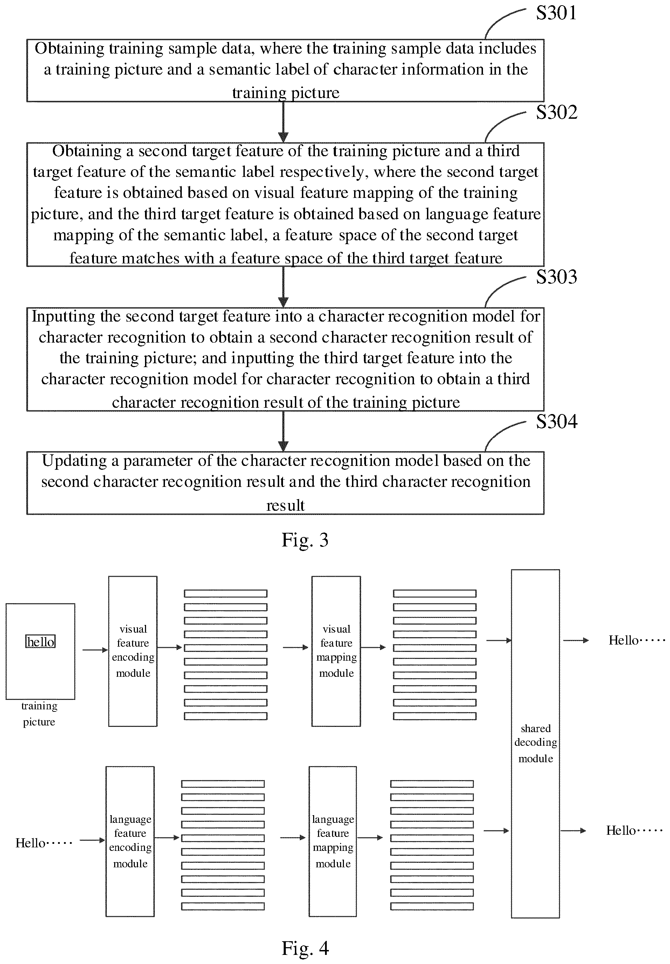

As shown in FIG. 3, the present application provides a model training method 300, including Step S301 to Step S304.

Step S301: obtaining training sample data, where the training sample data includes a training picture and a semantic label of character information in the training picture.

Step S302: obtaining a second target feature of the training picture and a third target feature of the semantic label respectively, where the second target feature is obtained based on visual feature mapping of the training picture, and the third target feature is obtained based on language feature mapping of the semantic label, a feature space of the second target feature matches with a feature space of the third target feature.

Step S303: inputting the second target feature into a character recognition model for character recognition to obtain a second character recognition result of the training picture; and inputting the third target feature into the character recognition model for character recognition to obtain a third character recognition result of the training picture. Step S304: updating a parameter of the character recognition model based on the second character recognition result and the third character recognition result.

This embodiment mainly describes a training process of the character recognition model. For the training of the character recognition model, in Step S301, training sample data may be constructed, where the training sample data may include a training picture and a semantic label of character information in the training picture. The training picture is a text picture, and in an actual training process, the number of the training pictures is plural.

The semantic label of the character information in the training picture may be represented by label L, which may be a word composed of characters. For example, the training picture includes a plurality of characters, which may form a word "hello", and the word "hello" is the semantic label of the character information in the training picture. Of course, in the case where the training picture includes a plurality of words, the semantic label of the character information in the training picture may be a sentence composed of the plurality of words.

In Step S302, the second target feature of the training picture (represented by IP_feat) and the third target feature of the semantic label (represented by LP_feat) may be obtained respectively. The attributes represented by the second target feature and the first target feature and obtaining manners of the second target feature and the first target feature are similar, and attributes represented by the two features both include visual attributes and language attributes of the picture, and both are obtained based on visual feature mapping. The first target feature is obtained based on the visual feature mapping of the target picture, and the second target feature is obtained based on the visual feature mapping of the training picture. In addition, the visual feature of the training picture and the visual feature of the target picture are obtained in a similar manner, and will not be repeated here.

The third target feature is obtained based on language feature (represented by L_feat) mapping of the semantic label, and attributes represented by the third target feature include visual attributes and language attributes of the training picture. A language feature of the semantic label may be obtained based on a language model, and the language model may be one-hot or word2vector, etc. During the training process of the character recognition model, the language model may be a pre-trained model or may be trained simultaneously with the character recognition model, that is, parameters of the character recognition model and the language model are alternately updated, and there is no specific limitation here.

Both the second target feature and the third target feature may be obtained based on feature mapping using a mapping function. In theory, all functions may be used as a mapping function. Feature mapping is performed on the visual feature of the training picture based on the mapping function to obtain the second target feature of the training picture, and feature mapping on the language feature of the training picture is performed based on the mapping function to obtain the third target feature of the training picture. A deep learning model transformer may be used as one kind of mapping function, that is, the transformer may be used as the mapping function. Using the transformer as the mapping function may perform non-linear transformation on a feature, and may also obtain a global feature of the training picture.

It should be noted that the visual feature of the training picture is mapped to one target domain, and the language feature of the training picture is mapped to another target domain. The feature spaces of the two target domains match, in an optional implementation, feature spaces of the two target domains are the same, that is, the feature space of the second target feature is the same as the feature space of the third target feature. Feature spaces of two domains being the same means that same attribute may be applied to the two domains to describe characteristics of things.

Since the second target feature and the third target feature both describe the same picture in the same feature space, that is, describe a same event, the second target feature and the third target feature are similar in the feature space. In other words, both of the second target feature and the third target feature have the visual feature of the training picture and at the same time have the language feature of the character in the training picture. In Step S103, both of the second target feature and the third target feature are respectively input into a character recognition model for character recognition to obtain a second character recognition result of and a third character recognition result. Specifically, the second target feature may be input into a character recognition model for feature decoding, i.e., character recognition, to obtain a character probability matrix, and the second character recognition result is obtained based on the character probability matrix. The third target feature may be input into a character recognition model for feature decoding, i.e., character recognition, to obtain another character probability matrix, and the third character recognition result is obtained based on this character probability matrix.

In an optional implementation, a recognized character string may include some additional characters. These additional characters are added in advance to align the semantic label with the dimension of the visual feature. In this application scenario, the additional characters may be removed, and finally the second character recognition result and the third character recognition result are obtained.

For example, the training picture includes the text content "hello", and the character probability matrix is w rows and C columns. If w is 10, after taking the target character category with a highest probability for each row, the resulting string is hello[EOS] [EOS][EOS][EOS][EOS], where [EOS] is an additional character added in advance, after removing it, the second character recognition result "hello" and the third character recognition result "hello" may be obtained.

In step S304, difference between the second character recognition result and the semantic label and difference between the third character recognition result and the semantic label may be respectively compared to obtain a network loss value of the character recognition model, and a parameter of the character recognition model is updated based on the network loss value by using a gradient descent method.

In this embodiment, the character recognition model is trained by sharing the visual features and the language features of the training pictures, so that training effect of the character recognition model may be improved. Correspondingly, the character recognition model may enhance recognition of word semantics based on shared target features, and improve accuracy of character recognition.

Optionally, the step S304 specifically includes: determining first difference information between the second character recognition result and the semantic label, and determining second difference information between the third character recognition result and the semantic label; updating the parameter of the character recognition model based on the first difference information and the second difference information.

In this embodiment, a distance algorithm may be used to compare the first difference information between the second character recognition result and the semantic label, and compare the second difference information between the third character recognition result and the semantic label. The first difference information and the second difference information are weight calculated to obtain the network loss value of the character recognition model, and the parameter of the character recognition model is updated based on the network loss value. When the network loss value tends to converge, the character recognition model update may be completed, so that the training of the character recognition model may be realized.

Optionally, the language feature of the semantic label is obtained in the following ways: performing vector encoding on a target semantic label to obtain character encoding information of the target semantic label, where a dimension of the target semantic label matches a dimension of the visual feature of the training picture, and the target semantic label is determined based on the semantic label; performing feature encoding on the character encoding information to obtain the language feature of the semantic label. In this embodiment, an existing or new language model may be used to perform vector encoding on the target semantic label to obtain the character encoding information of the target semantic label. The language model may be one-hot or word2vector. Specifically, transformer may be used to perform feature encoding on the semantic label to obtain the language feature of the training picture. Before input into the transformer, vector encoding on the character may be performed by the language model, and the target semantic label may be encoded into d-dimensional character encoding information using one-hot or word2vector.

When a length of the semantic label matches a length of the visual feature, the target semantic label is the semantic label of the character information in the training picture. When the length of the semantic label is less than the length of the visual feature, in order to align with the length of the visual feature of the training picture, that is, in order to match the dimension of the semantic tag with the dimension of the visual feature of the training picture, the length of the semantic label may be complemented to the length of the visual feature, such as w, to obtain the target semantic label. Specifically, an additional character such as "EOS" may be used to complement the semantic label, and the completed semantic label, that is, the target semantic label, may be vector-encoded. After the character encoding information is obtained, it may be input to the transformer to obtain a language feature L_feat of the training picture.

In this embodiment, by performing vector encoding on the target semantic label, the character encoding information of the target semantic label is obtained, and feature encoding on the character encoding information is performed to obtain the language feature of the semantic label. In this way, the character recognition model is combined with the language model for joint training, so that the character recognition model may use the language feature of the language model more effectively, thereby further improving the training effect of the character recognition model.

In order to explain the solution of the embodiments of the present application in more detail, the implementation process of training the character recognition model is described in detail below.

Referring to FIG. 4, FIG. 4 is a schematic view of a training implementation framework of the character recognition model. As shown in FIG. 4, in order to implement the model training method of the embodiments of the present application, five modules are included, namely a visual feature encoding module, a visual feature mapping module, a language feature encoding module, a language feature mapping module and a shared decoding module.

Specifically, a training picture having a size of h*w is input. The training picture includes text content of "hello", and the semantic label may be recorded as label L. The training picture is input into the implementation framework, and the purpose is training the character recognition model based on the training picture.

In the implementation process, feature encoding on the training picture may be performed by the visual feature encoding module to extract the visual feature of the target picture and obtain I_feat. Feature encoding on the semantic label is performed by the language feature encoding module to extract the language feature of the training picture and obtain L_feat.

The visual feature encoding module may use a convolutional neural network to extract the visual feature of the training picture. The language feature encoding module may use transformer to encode the semantic label. When the character is input into the transformer, vector encoding may be performed on the character, and one-hot or word2vector may be used to encode a feature into d-dimensional character encoding information. In order to align with the length of the visual feature, the length of the semantic label may be complemented to w. Specifically, an additional character such as "EOS" may be used to complement the semantic label to obtain a target semantic label. After the target semantic label is input into the language feature encoding module, the language feature L_feat may be obtained.

The visual feature may be input into the visual feature mapping module, and a function of the visual feature mapping module is to map the visual feature and language feature to a same feature space. The visual feature mapping module may use the transformer as the mapping function to perform feature mapping on the visual feature to obtain IP_feat. The language feature may be input into the language feature mapping module, and a function of the language feature mapping module is to map the language feature and visual feature to a same feature space. The language feature mapping module may use the transformer as the mapping function to perform feature mapping on the language feature to obtain LP_feat.

Both IP_feat and LP_feat are input into the shared decoding module, and the shared decoding module uses the character recognition model to decode IP_feat and LP_feat respectively for character recognition. Since IP_feat and LP_feat have the same semantic label, IP_feat and LP_feat will also be similar in feature space.

After passing through the visual feature mapping module and the language feature mapping module, the feature dimensions of IP_feat and FP_feat are both w*D. The shared decoding module uses the character recognition model to decode IP_feat and FP_feat respectively to obtain a character probability matrix w*C, where C is a character category. The character probability matrix represents a probability of each character category at each position, and the character recognition result may be obtained through the character probability matrix. The parameter of the character recognition model may be updated based on the character recognition result.

### Third Embodiment

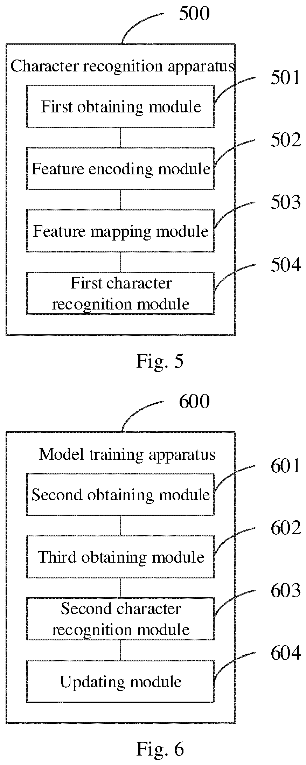

As shown in FIG. 5, the present application provides a character recognition apparatus 500, including: a first obtaining module 501, configured to obtain a target picture; a feature encoding module 502, configured to perform feature encoding on the target picture to obtain a visual feature of the target picture; a feature mapping module 503, configured to perform feature mapping on the visual feature to obtain a first target feature of the target picture, where the first target feature is a feature that has a matching space with a feature of character semantic information of the target picture; a first character recognition module 504, configured to input the first target feature into a character recognition model for character recognition to obtain a first character recognition result of the target picture.

Optionally, the feature mapping module 503 is specifically configured to perform non-linear transformation on the visual feature by using a target mapping function to obtain the first target feature of the target picture.

The character recognition apparatus 500 provided in the present application may implement the various processes implemented in the foregoing character recognition method embodiments, and may achieve the same beneficial effects. To avoid repetition, details are not described herein again.

### Fourth Embodiment

As shown in FIG. 6, the present application provides a model training apparatus 600, including: a second obtaining module 601, configured to obtain training sample data, where the training sample data includes a training picture and a semantic label of character information in the training picture; a third obtaining module 602, configured to obtain a second target feature of the training picture and a third target feature of the semantic label respectively, where the second target feature is obtained based on visual feature mapping of the training picture, the third target feature is obtained based on language feature mapping of the semantic label, and a feature space of the second target feature matches with a feature space of the third target feature; a second character recognition module 603, configured to input the second target feature into a character recognition model for character recognition to obtain a second character recognition result of the training picture, and input the third target feature into the character recognition model for character recognition to obtain a third character recognition result of the training picture; an updating module 604, configured to update a parameter of the character recognition model based on the second character recognition result and the third character recognition result.

Optionally, the updating module 604 is specifically configured to determine first difference information between the second character recognition result and the semantic label, and determine second difference information between the third character recognition result and the semantic label; and update the parameter of the character recognition model based on the first difference information and the second difference information.

Optionally, a language feature of the semantic label is obtained in the following ways: performing vector encoding on a target semantic label to obtain character encoding information of the target semantic label, where a dimension of the target semantic label matches a dimension of the visual feature of the training picture, and the target semantic label is determined based on the semantic label; performing feature encoding on the character encoding information to obtain the language feature of the semantic label. The model training apparatus 600 provided in the present application may implement the various processes implemented in the foregoing model training method embodiments, and may achieve the same beneficial effects. To avoid repetition, details are not described herein again.

According to the embodiments of the present application, the present application further provides an electronic device, a readable storage medium and a computer program product.

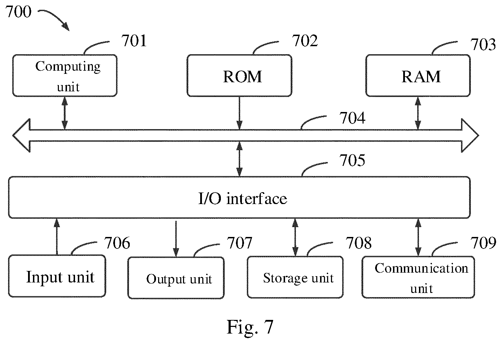

FIG. 7 shows a schematic block diagram of an example electronic device 700 that may be used to implement the embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile devices, such as personal digital processing, cellular phones, intelligent phones, wearable devices, and other similar computing devices. The components shown here, their connections and relationships, and their functions are merely for illustration, and are not intended to be limiting implementations of the disclosure described and/or required herein.

As shown in FIG. 7, the device 700 includes a computing unit 701. The computing unit 701 may perform various types of appropriate operations and processing based on a computer program stored in a read-only memory (ROM) 702 or a computer program loaded from a storage unit 708 to a random-access memory (RAM) 703. Various programs and data required for operations of the device 700 may also be stored in the RAM 703. The computing unit 701, the ROM 702 and the RAM 703 are connected to each other through a bus 704. An input/output (I/O) interface 705 is also connected to the bus 704.

Multiple components in the device 700 are connected to the I/O interface 705. The multiple components include an input unit 706 such as a keyboard and a mouse, an output unit 707 such as various types of displays and speakers, the storage unit 708 such as a magnetic disk and an optical disk, and a communication unit 709 such as a network card, a modem and a wireless communication transceiver. The communication unit 709 allows the device 700 to exchange information/data with other devices over a computer network such as the Internet and/or various telecommunications networks.

The computing unit 701 may be various general-purpose and/or dedicated processing components having processing and computing capabilities. Some examples of the computing unit 701 include, but are not limited to, central processing units (CPUs), graphics processing units (GPUs), various dedicated artificial intelligence (AI) computing chips, various computing units running machine learning models and algorithms, digital signal processors (DSPs) and any suitable processors, controllers and microcontrollers. The computing unit 701 performs various methods and processing described above, such as the character recognition method or model training method. For example, in some embodiments, the character recognition method or model training method may be implemented as a computer software program tangibly contained in a machine-readable medium such as the storage unit 708. In some embodiments, part or all of a computer program may be loaded and/or installed on the device 700 via the ROM 702 and/or the communication unit 709. When the computer program is loaded to the RAM 703 and executed by the computing unit 701, one or more steps of the preceding image detection method may be performed. Alternatively, in other embodiments, the computing unit 701 may be configured, in any other suitable manner (for example, by means of firmware), to perform the character recognition method or model training method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software and/or combinations thereof. These various embodiments may include: implementations in one or more computer programs, which may be executed by and/or interpreted on a programmable system including at least one programmable processor, the programmable processor may be application specific or general-purpose and may receive data and instructions from a storage system, at least one input apparatus and/or at least one output apparatus, and may transmit the data and instructions to the storage system, the at least one input apparatus, and the at least one output apparatus.

Program codes for implementing the methods of the present disclosure may be compiled in any combination of one or more programming languages. These program codes may be provided for a processor or controller of a general-purpose computer, a dedicated computer or another programmable data processing device such that the program codes, when executed by the processor or controller, cause functions/operations specified in the flowcharts and/or block diagrams to be implemented. The program codes may be executed in whole on a machine, executed in part on a machine, executed, as a stand-alone software package, in part on a machine and in part on a remote machine, or executed in whole on a remote machine or a server. In the context of the present disclosure, a machine-readable medium may be a tangible medium that may include or store a program that is used by or in conjunction with a system, apparatus or device that executes instructions. The machine-readable medium may be a machine-readable signal medium or a machine-readable storage medium. Machine-readable media may include, but are not limited to, electronic, magnetic, optical, electromagnetic, infrared or semiconductor systems, apparatuses or devices or any suitable combinations thereof. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device or any suitable combination thereof. To provide interaction with the user, the systems and technologies described herein can be implemented on a computer that has: a display apparatus (e.g., a cathode ray tube (CRT) or liquid crystal display (LCD) monitor) for displaying information to the user; and a keyboard and a pointing apparatus (e.g., a mouse or a trackball) through which the user can provide input to the computer. Other kinds of apparatuses may also be used to provide interaction with the user. For example, the feedback provided to the user may be any form of sensory feedback (e.g., a visual feedback, an auditory feedback, or a haptic feedback), and may be in any form (including an acoustic input, a voice input, or a haptic input) to receive input from the user.

The systems and technologies described herein can be implemented in a computing system that includes a back-end component (e.g., as a data server), or a middleware components (e.g., an application server), or a front-end component (e.g., a user computer with a graphical user interface or web browser through which the user can interact with the implementation of the systems and technologies described herein), or any combination of such back-end component, middleware component or front-end component. Various components of the system may be interconnected by digital data communication in any form or via medium (e.g., a communication network). Examples of a communication network include: a local area network (LAN), a wide area network (WAN), the Internet and a blockchain network.

The computer system may include a client and a server. The client and server are typically remote from each other and interact via a communication network. The client-server relationship is created by computer programs running on respective computers and having a client-server relationship with each other. The server can be a cloud server, also known as a cloud computing server or a cloud host, which is a host product in the cloud computing service system to solve defects of difficult management and weak business scalability in the traditional physical host and VPS service ("Virtual Private Server", or "VPS" for short). The server can also be a server of a distributed system, or a server combined with a blockchain.

It should be understood that the various forms of processes shown above may be used, and steps may be reordered, added or removed. For example, various steps described in the present application can be executed in parallel, in sequence, or in alternative orders. As long as the desired results of the technical solutions disclosed in the present application can be achieved, no limitation is imposed herein.

The foregoing specific implementations do not constitute any limitation on the protection scope of the present application. It should be understood by those skilled in the art that various modifications, combinations, sub-combinations and substitutions may be made as needed by design requirements and other factors. Any and all modification, equivalent substitution, improvement or the like within the spirit and concept of the present application shall fall within the protection scope of the present application.

## Claims

1. A character recognition method, comprising:
obtaining a target picture;
performing feature encoding on the target picture to obtain a visual feature of the target picture;
performing feature mapping on the visual feature to obtain a first target feature of the target picture, wherein the first target feature is a feature that has a matching space with a feature of character semantic information of the target picture;
inputting the first target feature into a character recognition model for character recognition, to obtain a first character recognition result of the target picture.

2. The method according to claim 1, wherein the performing the feature mapping on the visual feature to obtain the first target feature of the target picture comprises:
performing non-linear transformation on the visual feature by using a target mapping function, to obtain the first target feature of the target picture.

3. A model training method, comprising:
obtaining training sample data, wherein the training sample data comprises a training picture and a semantic label of character information in the training picture;
obtaining a second target feature of the training picture and a third target feature of the semantic label respectively, wherein the second target feature is obtained based on visual feature mapping of the training picture, the third target feature is obtained based on language feature mapping of the semantic label, and a feature space of the second target feature matches with a feature space of the third target feature;
inputting the second target feature into a character recognition model for character recognition, to obtain a second character recognition result of the training picture; and inputting the third target feature into the character recognition model for character recognition, to obtain a third character recognition result of the training picture;
updating a parameter of the character recognition model based on the second character recognition result and the third character recognition result.

4. The method according to claim 3, wherein, the updating the parameter of the character recognition model based on the second character recognition result and the third character recognition result comprises:
determining first difference information between the second character recognition result and the semantic label, and determining second difference information between the third character recognition result and the semantic label;
updating the parameter of the character recognition model based on the first difference information and the second difference information.

5. The method according to claim 3, wherein, a language feature of the semantic label is obtained in the following ways:
performing vector encoding on a target semantic label to obtain character encoding information of the target semantic label, wherein a dimension of the target semantic label matches a dimension of the visual feature of the training picture, and the target semantic label is determined based on the semantic label;
performing feature encoding on the character encoding information to obtain the language feature of the semantic label.

6. A character recognition apparatus, comprising:
a first obtaining module, configured to obtain a target picture;
a feature encoding module, configured to perform feature encoding on the target picture to obtain a visual feature of the target picture;
a feature mapping module, configured to perform feature mapping on the visual feature to obtain a first target feature of the target picture, wherein the first target feature is a feature that has a matching space with a feature of character semantic information of the target picture;
a first character recognition module, configured to input the first target feature into a character recognition model for character recognition, to obtain a first character recognition result of the target picture.

7. The apparatus according to claim 6, wherein, the feature mapping module is specifically configured to perform non-linear transformation on the visual feature by using a target mapping function, to obtain the first target feature of the target picture.

8. A model training apparatus, comprising:
a second obtaining module, configured to obtain training sample data, wherein the training sample data comprises a training picture and a semantic label of character information in the training picture;
a third obtaining module, configured to obtain a second target feature of the training picture and a third target feature of the semantic label respectively, wherein the second target feature is obtained based on visual feature mapping of the training picture, the third target feature is obtained based on language feature mapping of the semantic label, and a feature space of the second target feature matches with a feature space of the third target feature;
a second character recognition module, configured to input the second target feature into a character recognition model for character recognition, to obtain a second character recognition result of the training picture; and input the third target feature into the character recognition model for character recognition, to obtain a third character recognition result of the training picture;
an updating module, configured to update a parameter of the character recognition model based on the second character recognition result and the third character recognition result.

9. The apparatus according to claim 8, wherein, the updating module is specifically configured to determine first difference information between the second character recognition result and the semantic label, and determine second difference information between the third character recognition result and the semantic label; and update the parameter of the character recognition model.

10. The apparatus according to claim 8, wherein, a language feature of the semantic label is obtained in the following ways:
performing vector encoding on a target semantic label to obtain character encoding information of the target semantic label, wherein a dimension of the target semantic label matches a dimension of the visual feature of the training picture, and the target semantic label is determined based on the semantic label;
performing feature encoding on the character encoding information to obtain the language feature of the semantic label.

11. An electronic device, comprising:
at least one processor; and
a memory in communication connection with the at least one processor; wherein,
the memory stores thereon instructions executable by the at least one processor, and the instructions, when executed by the at least one processor, cause the at least one processor to perform the method according to claim 1 or 2, or cause the at least one processor to perform the method according to any one of claims 3 to 5.

12. A non-transitory computer readable storage medium, storing thereon computer instructions that are configured to enable a computer to implement the method according to claim 1 or 2, or implement the method according to any one of claims 3 to 5.

13. A computer program product comprising a computer program, wherein, when executing the computer program, a processor implements the method according to claim 1 or 2, or implements the method according to any one of claims 3 to 5.
